# EUROPEAN PATENT APPLICATION

(11) **EP 2 672 238 A1**
(43) Date of publication of application: **11.12.2013**
(21) Application number: 12400018.3
(22) Date of filing: 06.06.2012
(51) Int. Cl.: G01G 19/07, G01M 1/12

(54) **Ground load detection system and method of operating said system**

(71) Applicant: Eurocopter Deutschland GmbH, 86609 Donauwörth (DE)
(72) Inventor: Dietz, Markus, 85579 Neubiberg (DE); Surauer, Christian, 83339 Chieming (DE); Preissler, Dieter, 85662 Hohenbrunn (DE); Mock, Maximilian, 80804 Münich (DE)
(74) Representative: Schmid, Rudolf

(57) **Abstract**

The invention relates to a ground load detection system for detecting total weight, monitoring of center of gravity of a helicopter and detecting the loads generated by its interaction with the ground, comprising a fuselage (1) of the helicopter, a landing gear being mounted to the fuselage (1) by separate mounting points (3), ground load cells with preferably strain gauges (15-26) integrated into each of said load carrying mounting points (3), a control unit, and connection means from said ground load cells (15-26) to said control unit for calculations of the loads transferred from the ground load cells (15-26). The invention relates as well to a method of operating said system.

## Description

This invention relates to a ground load detection system as part of a helicopter with the features of the preamble of claim 1 and to a method of operating said system with the features of the preamble of claim 6.

Critical factors at take off of any aircraft are the weight and balance of the aircraft, such as a helicopter. The center of gravity (CG) envelope, i. e. the extreme CG positions must be respected during the whole flight. If CG data is precisely known by the H/C computers, the flight envelope (speed, load factor, etc.) can be automatically restricted whilst exceeding the CG envelope. Alternatively, the flight envelope can be opened when CG data is uncritical.

Before getting airborne, a helicopter should be balanced at take-off to avoid inappropriate moves of the helicopter. Whether the helicopter is balanced at the moment of take-off can be determined by observing all forces and moments acting on the landing gear.

Calculations to determine weight and center of gravity of an aircraft are known and documented.

The document US 4780838 (A) discloses a helicopter weight and torque advisory system for connection to cargo hook load sensors, fuel flow, air temperature and altitude indicating systems of a helicopter. The advisory system provides the flight crew of the helicopter information as to available engine torque, gross weight, gross weight center of gravity condition and weight supported by each cargo hook as an external sling load is raised and supported by the helicopter. Information as to operating weight empty, fuel weight and center of gravity are to be entered manually. External cargo hook load sensors are provided and displays showing the individual loads supported by each external load hook.

The document EP 0625260 (A1) discloses an onboard system for use in measuring, computing and displaying the gross weight and location/relocation of the center of gravity for an aircraft. Temperature and pressure transmitters and transducers are mounted in relation to each of the landing gear struts for transmission of said temperature and pressure signals to an onboard micro-computer/controller with redundancy for accuracy and failure protection. The system also incorporates a software correction program to correct and compensate for physical changes to strut components due to temperature fluctuations, O-ring seal drag and hysteresis within modern day "shock absorbing" aircraft landing gear struts. The computer makes adjustments for internal temperature changes and drag; converts sustained pressures to the weight supported by each strut, and computes the aircraft's current gross weight and center of gravity. The computer also is pre-programmed to illuminate a "Hard Landing Indicator Light" mounted on the display, when pre-programmed individual strut pressure limits are exceeded and sensed during landing. These pressure readings are stored in the computer memory and can be utilized when the aircraft is inspected and serviced. The use of temperature and pressure transmitters and transducers in relation to each of the landing gear struts renders this state of the art complex, expensive and inefficient for maintenance.

The document US 2010063718 (A1) describes a system for continuous monitoring of center of gravity and total weight of an airplane at rest on the ground. Information from strain gauge transducers located on structural members for the nose wheel and main landing gear is communicated to a computer where calculations are made and data is transmitted to gauges in the airplane cockpit. Range limits for the airplane center of gravity with respect to the center of lift, and also the total airplane weight overload limit are clearly indicated on the respective gauges. A marking on said gauges indicate overload. Said system for continuous monitoring is not suitable for a helicopter with a skid type landing gear. Extra loads outside an airplane are not a configuration to be considered for the design of said airplane of the state of the art.

The document US 4850552 A discloses a landing gear load sensor for an aircraft having a skid type landing gear. The sensor includes a shear beam having a load bearing area. Structure is provided for mounting the shear beam to the aircraft, such that the load bearing area is disposed adjacent the landing gear. Structure is disposed on the shear beam between the mounting structure and the load bearing area for sensing shear load on the shear beam. The load sensor is rendered insensitive to side loading and variations in the load application point due to the motion of cross tubes.

It is an object of the present invention to provide for a ground load detection system in order to improve the trim of the helicopter at take off from the ground and it is a further object of the present invention to provide a method for operating said ground load detection system.

A solution is provided with a ground load detection system for detecting of a center of gravity and weight of a helicopter with the features of claim' 1 and with a method of operating said system with the features of the preamble of claim 6.

According to the invention for detecting preferably total weight, including detection of optional external loads and monitoring of the center of gravity of a helicopter, a ground load detection system comprises a fuselage of the helicopter and a landing gear mounted to the fuselage by mounting points, e. g. the landing gear of a skid type landing gear mounted to the fuselage with two separate, preferably bow shaped struts, each of such struts being mounted to the fuselage by two separate mounting points. Ground load cells are integrated into each of said mounting points. Each of said ground load cells comprise preferably four strain gauges arranged as full bridge for maximum precision of load detection or two strain gauges as half bridge or even only one strain gauge as quarter bridge for less precision of load detection. A control unit and connection means are provided. The connection means allow transfer of data from said ground load cells to said control unit for calculations of a gross weight and/or external loads of the helicopter from the respective loads detected by the respective ground load cells. Each of said load carrying mounting points comprise preferably rectangular and parallel to each other oriented planes and one of said at least two separate ground load cells is mounted to each of said preferably rectangular or parallel to each other oriented planes. More preferably all of the rectangular and parallel to each other oriented planes of a load carrying mounting point are provided with one ground load cell. The advantage of the inventive ground load detection system with an arrangement of the ground load cells at load carrying interfaces between said landing gear and the fuselage, preferably at interfaces between the struts and the load carrying mounting points allows to weigh all the loads on a skid-type or wheeled landing gear, including wind forces on the fuselage while the helicopter is on the ground. The inventive ground load detection system with a control unit linked to each of the ground load cells provides as well for the determination of the center of gravity of the helicopter at any time at the ground detecting total weight and monitoring the center of gravity of the helicopter with an option for taking into account external loads like wind and the distance of the center of gravity of the helicopter above the ground. Thus the inventive ground load detection system allows detection of any forces/moments exerted along/around any or all of the longitudinal, transversal or vertical axis for improved trim of the helicopter at vertical automated take off. Another advantage of the invention is due to the high integration of plural functions at the ground load cells integral with the load carrying mounting points. Thus the inventive ground load detection system allows dispense with any or all of the following supplementary aids:
- Intelligent algorithms for ground recognition, such algorithms not being able to guarantee for all possible conditions a correct recognition,
- weight measurement, and/or pilot input of the take-off weight,
- switches, that are difficult to adjust,
- potentiometers, that are complex to install and not sufficient sensitive,
- ultrasonic sensors, that are complex to install and not sufficient selective,
- piezo elements as force sensors, that are complex to install and not sufficient selective, or
- quartz crystal longitudinal measurement plugs, that are as well complex to install and not sufficient selective.

According to a further advantage of the inventive system the new and ameliorated data provided by the inventive system can be used to improve helicopter functions, such as a Health and usage monitoring system (HUMS) or a virtual low air speed sensor (V-LASS).

According to a preferred embodiment of the invention each of said mounting points comprise two fork type projections separated from and facing each other, said fork type projections interacting preferably with bolts protruding from the struts of the skid-type landing gear. Each of said fork type projections comprise at least two separate ground load cells. At least one of said at least two separate ground load cells is mounted to one of said preferably rectangular to each other oriented planes of each of said respective fork type projections to weigh all the loads on a skid type landing gear of a helicopter.

According to a further preferred embodiment of the invention the two fork type projections of a mounting point are symmetric with regard to the preferably bow shaped strut for less complex data processing.

According to a further preferred embodiment of the invention the ground load cells are composed of strain gauges, Linear Variable Differential Transformer (LVDT), Lasers or dynamometers for more flexible measurements of loads.

According to a further preferred embodiment of the invention the respectively rectangular to each other oriented planes of each of said respective fork type projections are parallel to at least two from the longitudinal, transversal or vertical axis Fx, Fy or Fz of the helicopter.

According to a preferred embodiment of the invention a method of operating said ground load detection system allows determination of the helicopter weight and determination of the center of gravity in the horizontal plane without further means.

According to a further preferred embodiment of the invention a method of operating said ground load detection system allows determination of the distance from the ground of the center of gravity of the helicopter by detecting the loads at all load carrying mounting points of the helicopter in a first position on the ground, then inclining the helicopter relative to the first position and detecting the loads at all load carrying mounting points of the helicopter in said inclined position on the ground. From the differences of the loads at the mounting points of the helicopter in the first position compared to the loads at the mounting points of the helicopter in said inclined position on the ground the control unit derives the distance from the ground of the center of gravity of the helicopter when the 3D center of gravity position is needed. The inventive method allows dispense with any mechanisms for centre of gravity weighing. The ground load cells at the landing gear of the inventive system can be used in the scope of maintenance to determine the three-dimensional space position of the centre of gravity without any further supplementary aids.

Preferred embodiments of the present invention are presented with the following detailed description by means of the attached drawings.
Fig. 1 shows a schematic view of a helicopter with a landing gear according to the invention, and
Fig. 2 shows a chart for an electrical layout for a load detection system of a landing gear according to the invention.

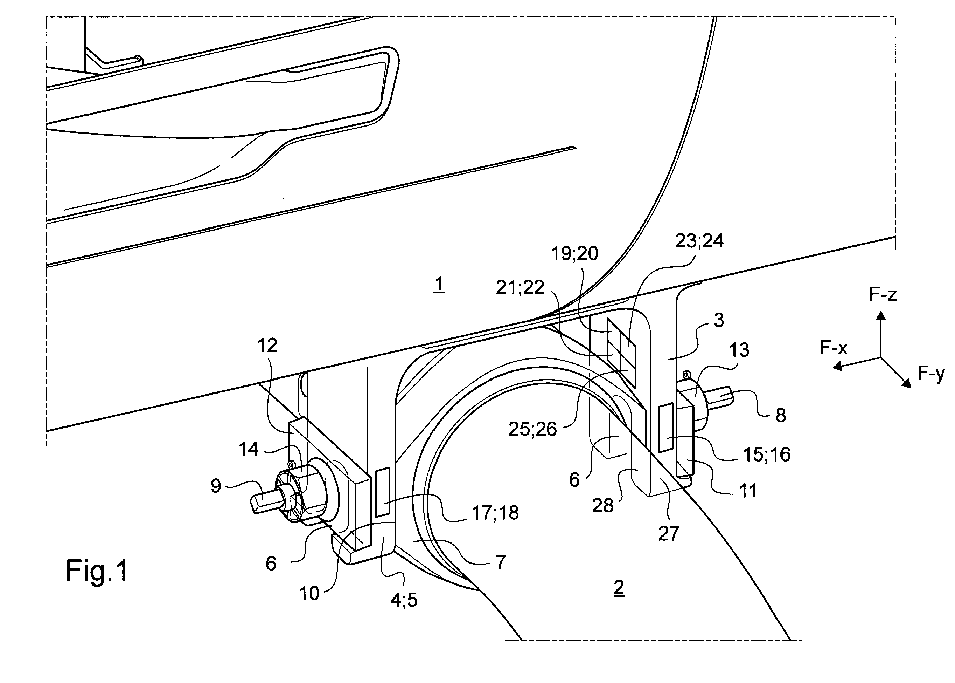

According to Fig. 1 a fuselage 1 of a helicopter (not shown) is provided with a landing gear of any type, e. g. a wheeled or skid type landing gear. The skid type, landing gear comprises two separated bow or otherwise shaped struts 2 extending essentially transversely and symmetrically to a longitudinal axis Fₓ of the helicopter. A vertical axis F_{z} and a transversal axis Fy are indicated aside as reference.

Each of the bow- or otherwise shaped struts 2 is fixed by means of two mounting points 3 to the fuselage 1. The bow- or otherwise shaped struts 2 are fixed to the fuselage at predetermined positions along the longitudinal axis and the mounting points 3 are fixed at predetermined positions relative to the transversal axis of the helicopter.

Each mounting point 3 of the fuselage 1 is provided with two fork type projections 4, 5 separated from and facing each other for each of the mounting points 3. A groove 6 is provided in each of the two fork type projections 4, 5.

Each of the mounting points 3 encompasses the bow or otherwise shaped struts 2 with the two fork type projections 4, 5 around an essentially annular ring 7 surrounding the respective bow or otherwise shaped struts 2. The annular ring 7 is fixed to the strut 2 in line with the grooves 6 of the two fork type projections 4, 5.

Bolts 8, 9 are provided through the grooves 6 of the two fork type projections 4, 5 on either side of the annular ring 7, said essentially horizontal bolts 8, 9 being arranged essentially rectangular to flattened areas 10 of the ring 7. Essentially rectangular elements 11, 12 are fixed from outside the fork type projections 4, 5 onto the bolts 8, 9 and nuts 13, 14 are tightened onto each of the respective free ends of each of the bolts 8, 9 while the essentially rectangular elements 11, 12 interact with the two fork type projections 4, 5 to hold each of the bolts 8, 9 in its respective groove 6.

At least one ground load cell of preferably 3, each consisting of a set of four strain gauges, 15-18 or/and 19-22 or/and 23-26, is mounted to each of said preferably rectangular to each other oriented planes of each of the fork type projections 4, 5 of the mounting points 3 to detect any loads on any of the four mounting points 3.

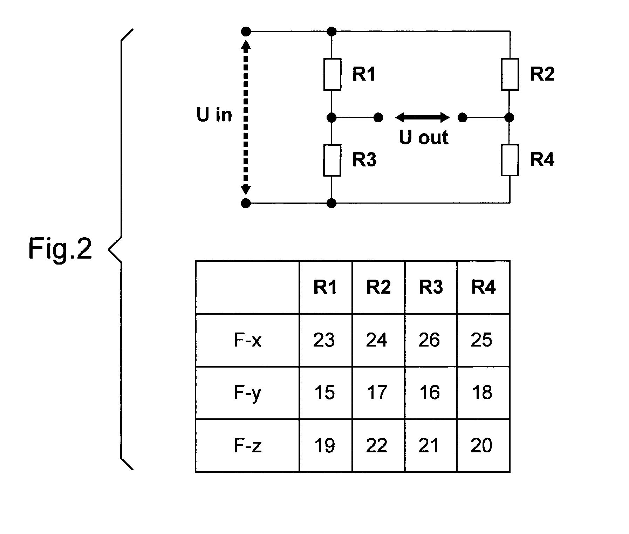

According to Fig. 2 corresponding features are referred to with the references of Fig. 1. The respective set(s) of ground load cells with four strain gauges 15-18 for detection of any forces Fy in a direction essentially along the strut 2 or/and the ground load cells with four strain gauges 19-22 for detection of any forces Fx in an essentially longitudinal direction of the helicopter fuselage or/and the ground load cells with four strain gauges 23-26 for detection of any forces Fz in an essentially vertical direction rectangular to the strut 2 are configured like strain gauges R1, R2, R3 and R4 with the setting of a full bridge.

The arrangement of three ground load cells each with four strain gauges 15-26 corresponding to the strain gauges R1, R2, R3 and R4 is indicated in the scheme. As an assembly said ground load cells for detection of forces Fx, Fy and Fz, each with four strain gauges 15-26, are suitable to detect any forces/moments exerted along/around any or all of the longitudinal, transversal or vertical axis of the helicopter.

For said detection an input voltage U_{IN} is applied to the strain gauges R₁, R₃ in series, and to the strain gauges R₂ and R₄ in series of the full bridge and a detection voltage U_{OUT} is tapped from two center taps between the two strain gauges R₁ and R₃ and the two parallel strain gauges R₂ and R₄ of the full bridge. Sets of the ground load cells 15- 26 are respectively integrated at all load carrying mounting points 3.

The respective ground load cells 15-26 are connected via connection means (not shown), i. e. electric cables and an internal interface to a control unit (not shown), such as a microcomputer.

The control unit comprises an external interface (not shown) for loading of data from a health and usage monitoring system (HUMS) (not shown).

Method to operate the ground load detection system for detecting total weight and monitoring of center of gravity of a helicopter

The ground load detection system is operated to detect in a first step the gross weight of the helicopter and the load distribution over the load carrying mounting points in a first position on the ground from the load signals at each of the ground load cells 15-26. The respective load signals are set as reference data in the control unit.

Then the helicopter is inclined with a defined angle relative to said first position on the ground and the ground load detection system is operated again to detect in a further step the gross weight of the helicopter and the load distribution over the load carrying mounting points in said inclined position relative to the first position on the ground from the load signals at each of the ground load cells 15-26. The respective load signals for said inclined position are set as comparative data relative to the first position in the control unit to determine the distance from the ground of the center of gravity of the helicopter.

### List of References

- 1: fuselage
- 2: struts
- 3: mounting points
- 4: fork type projection
- 5: fork type projection
- 6: groove
- 7: annular ring
- 8: bolt
- 9: bolt
- 10: flattened area
- 11: rectangular element
- 12: rectangular element
- 13: nut
- 14: nut
- 15-26: strain gauges
- 27: plane
- 28: plane

## Claims

1. A ground load detection system for detecting preferably total weight, including optional external loads, and monitoring of center of gravity of a helicopter, comprising
- a fuselage (1) of the helicopter,
- a landing gear being mounted to the fuselage (1) by mounting points (3),
- ground load cells with each preferably up to four strain gauges (15-26) integrated into the load carrying mounting points (3),
- a control unit, and
- connection means from said ground load cells (15-26) to said control unit for calculations of the loads transferred from the load carrying ground load cells (15-26),
**characterized in that** each of said load carrying mounting points (3) comprise respectively rectangular and respectively parallel to each other oriented planes (27, 28) and at least two separate ground load cells (15-26) each respectively mounted to one of the respectively rectangular or parallel to each other oriented planes (27, 28).

2. The ground load detection system according to claim 1,
**characterized in that** each of said mounting points (3) comprise two fork type projections (4, 5) separated from and facing each other, said fork type projections (4, 5) interacting with struts (2) of a skid-type landing gear, each of said fork type projections (4, 5) comprising at least two separate ground load cells (15-26) and at least one of said at least two separate ground load cells (15-26) being mounted to each of said respectively rectangular to each other oriented planes (27, 28) of each of said respective fork type projections (4, 5).

3. The ground load detection system according to claim 2,
**characterized in that** the two fork type projections (4, 5) of a mounting point (3) are symmetric.

4. The ground load detection system according to claim 1,
**characterized in that** the ground load cells are Linear Variable Differential Transformer (LVDT), Lasers or dynamometers.

5. The ground load detection system according to claim 2,
**characterized in that** the respectively rectangular to each other oriented planes (27, 28) of each of said respective fork type projections (4, 5) are essentially parallel to at least two from the longitudinal, transversal or vertical axis of the helicopter.

6. A method of operation of said ground load detection system according to any of the preceding claims,
**characterized by**
- detecting the loads at the load carrying mounting points of the landing gear during the take-off process and/or during the touch-down process,
- and calculating at least one force and/or at least one moment which is/are generated by the interaction of the helicopter and the landing gear.

7. The method of operating said ground load detection system according to claim 6,
**characterized by**
- detecting the loads at the load carrying mounting points (3) of the helicopter in a first position on the ground,
- inclining the helicopter relative to the first position,
- detecting the loads at the load carrying mounting points (3) of the helicopter in said inclined position on the ground and
- determining the distance from the ground of the center of gravity of the helicopter from the differences of the loads at the load carrying mounting points (3) of the helicopter in the first position compared to the loads at the load carrying mounting points (3) of the helicopter in said inclined position on the ground.
